# EUROPEAN PATENT APPLICATION

(11) **EP 1 632 395 A2**
(43) Date of publication of application: **08.03.2006**
(21) Application number: 05016797.2
(22) Date of filing: 02.08.2005
(51) Int. Cl.: B60R 1/072, G01B 7/30, H01F 7/02

(54) **Mirror and angle detection device**

(30) Priority: 05.08.2004 JP 2004229747
(71) Applicant: Murakami Corporation, Shizuoka-shi, Shizuoka, 422-8569 (JP)
(72) Inventor: Yamada, Ayako, Fujieda-shi Shizuoka 426-0053 (JP)
(74) Representative: Strehl Schübel-Hopf & Partner

(57) **Abstract**

Disclosed is a mirror that has a mirror surface of which orientation is variable, and that can be miniaturized at a low cost. The mirror includes an actuator for changing the orientation of the mirror surface by swiveling the mirror surface around axes parallel to the mirror surface, an interlocking member for changing its orientation in conjunction with the mirror surface, so as to face in the same direction as that of the mirror surface, one or more slide blocks being urged toward the interlocking member to thereby move in a direction substantially perpendicular to the mirror surface and in proportion to a swivel amount of the mirror surface, upon swivel of the interlocking member, and a swivel amount detector for detecting the swivel amount of the mirror surface, based on the moving amounts of the slide blocks.

## Description

### CROSS REFERENCE TO RELATED

The present application claims priority under 35 U.S.C. § 119 of Japanese Patent Application No. 2004-229747, filed on August 5, 2004, entitled MIRROR AND ANGLE DETECTION DEVICE". The contents of that application are incorporated herein by reference in their entirety.

### BACKGROUND OF THE INVENTION

### 1. Field of the Invention

The present invention relates to a mirror and an angle detection device.

### 2. Description of the Related Art

A known model of mirror angle detection devices is one having a structure that a magnet is attached on a plate pivot (or pivot table) in mirror assembly, and that a magnetic sensing device is provided in angle changing assembly (see Japanese Utility Model Application, Laid-Open No. 3-112441 U). This model senses the variation in a magnetic field which depends on the inclination of a mirror surface.

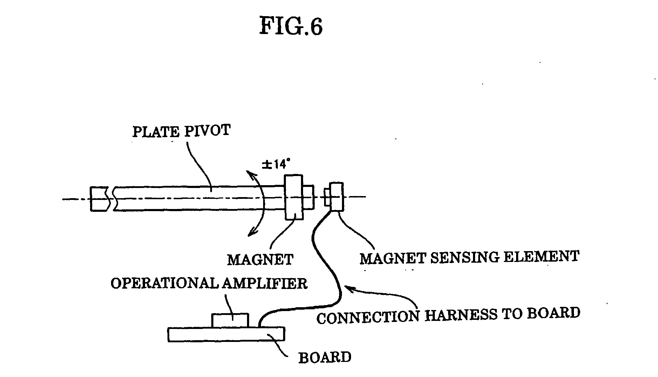

In this model, in order for the magnet attached on the plate pivot to detect the angle of the mirror surface which changes widely, the magnet needs to be enlarged in proportion to the range of angle of the plate pivot. In addition, to sense the variation in the magnetic field precisely, the pivot point of the plate pivot, the center of the magnet, and the neutral of the magnetic sensing element are necessary to be aligned with one another, as shown in Fig. 6. This alignment limits the layout of individual components, so that the efficient use of the space inside a mirror angle detection device is inhibited. If an angle detection device is applied to an outer mirror of vehicles, then the efficient use of the space inside the device is an important matter, because the space in the body of an outer mirror is confined.

Moreover, an actuator for inclining the mirror surface is exclusive to a specific angle detection device and, therefore its application is limited. In addition, when a magnetic sensing element is placed near a magnet, its working property is deteriorated due to special routing manner of harnesses, etc., thus leading to cost increase of an angle detection device.

An object of the present invention is to provide a mirror and an angle detection device that are both capable of overcoming the above disadvantages.

### SUMMARY OF THE INVENTION

### [First Structure]

A mirror having a mirror surface of which orientation is variable, includes:
(a1) an actuator for changing the orientation of the mirror surface by swiveling the mirror surface around axes parallel to the mirror surface;
(a2) an interlocking member for changing its orientation in conjunction with the mirror surface, so as to face in the same direction as that of the mirror surface;
(a3) one or more slide blocks being urged toward the interlocking member to thereby move in a direction substantially perpendicular to the mirror surface and in proportion to a swivel amount of the mirror surface, upon swivel of the interlocking member; and
(a4) a swivel amount detector for detecting the swivel amount of the mirror surface, based on the moving amounts of the slide blocks.

Furthermore, the interlocking member includes one or more slide block attachment portions for supporting ends of the slide blocks, so that the ends of the slide blocks do not slide on the interlocking member, upon swivel of the interlocking member.

With the first structure, the swivel (or circular) movement of the mirror surface is converted into the linear movement of the slide blocks, so that the angle of the mirror surface can be detected precisely. In addition, the first structure improves the flexibility of arrangement of a swivel amount detector and other components. This makes it possible to use the space inside the actuator efficiently, thus contributing to the cost reduction in the mirror. Moreover, since the slide blocks are fixed to the interlocking member, the stick-slip of the slide blocks which is caused by the swivel of the interlocking member can be prevented. Herein, " stick-slip" means a manner in which the slide blocks slide on the interlocking member, while changing the contact points with the interlocking member. Also, the inclination of the slide blocks can be prevented from being varied depending on the swivel direction of the mirror surface. This can prevent hysteresis from affecting the result of the swivel amount detector.

Herein, "substantially vertical direction with respect to the mirror surface" means a direction perpendicular to the not-inclined mirror surface. The mirror is, for example, an outer mirror for vehicles. The interlocking member may be a passive member, such as a mirror holder or a housing, that travels in relation to the movement of the mirror. Alternatively, the interlocking member may be an active member, such as a plate pivot, that drives the mirror surface. In addition, the interlocking member may be the part of the mirror surface. The slide blocks and swivel amount detector may be arranged relative to any of the components of the mirror, such as a mirror surface, a mirror holder, a plate pivot and a housing. Furthermore, they may be positioned either inside or outside the actuator.

### [Second Structure]

The interlocking member includes a plate pivot that swivels around the axes parallel to the mirror surface, thereby inclining the mirror surface. With the second structure, the angle of the mirror surface can be detected precisely without any additional members. In this case, the slide blocks are urged toward the back surface of the plate pivot. Note that the back surface of the plate pivot refers to a surface facing in the same direction as that of the mirror.

### [Third Structure]

Each of the slide block attachment portions includes a recess formed in the interlocking member, and accommodates an end of corresponding one of the slide blocks, thereby supporting the end in such a way that it can pivot. With the third structure, the slide blocks can be secured to the interlocking member firmly.

### [Fourth Structure]

The actuator swivels the mirror surface around first and second axes that are different from each other. The mirror further includes first and second slide blocks which operate on the first and second axes, and are urged toward points on the first and second axes of the interlocking member, respectively. In addition, the interlocking member includes a first balancing mechanism for supporting the first slide block so as not to move in relation to the swivel of the mirror surface around the second axis, and a second balancing mechanism for supporting the second slide block so as not to move in relation to the swivel of the mirror surface around the first axis.

With the fourth structure, the slide blocks are prevented from moving regardless of the swivel direction of the mirror surface, so that the accuracy of output of the swivel amount detector can be ensured.

### [Fifth Structure]

The first and second slide blocks have projections protruding along the first and second axes, respectively. The first and second balancing mechanisms include recesses which are placed close to the first and second slide block attachment portions supporting the first and second slide blocks, respectively, and which are arranged on the first and second axes where the first and second slide blocks operate, respectively. In addition, the first and second balancing mechanisms receive the projections of the first and second slide blocks in this order.

With the fifth structure, the slide blocks are prevented from moving regardless of the swivel direction of the mirror surface, so that the accuracy of output of the swivel amount detector can be ensured.

### [Sixth Structure]

An angle detection device for detecting an angle of a mirror surface, includes:
(b1) one or more slide blocks being urged toward an interlocking member that changes its orientation in conjunction with the mirror surface so as to face in the same direction as that of the mirror surface, the slide blocks for moving in a direction substantially perpendicular to the mirror surface and by an amount in proportion to a swivel amount of the interlocking member, when the interlocking member swivels; and
(b2) a swivel amount detector for detecting the swivel amount of the mirror surface, based on moving amounts of the slide blocks.

Furthermore, the interlocking member includes one or more slide block attachment portions for supporting respective ends of the slide blocks so as not to slide on the interlocking member upon swivel of the interlocking member.

With the sixth structure, the same effect as that of the first structure can be produced.

Other aspects, features and advantages of the present invention will become apparent upon reading the following specification and claims when taken in conjunction with the accompanying drawings.

### BRIEF DESCRIPTION OF THE DRAWINGS

For more complete understanding of the present invention and the advantages hereof, reference is now made to the following description taken in conjunction with the accompanying drawings wherein:
Fig. 1 is a view depicting a mirror 18 according to one embodiment of the present invention;
Fig. 2A is a view depicting the motion of a plate pivot 10;
Fig. 2B depicting a detail structure of a plate pivot 10 and a slide blocks 20;
Fig. 3A is an enlarged view depicting the periphery of a slide block attachment portion 42;
Fig. 3B is a view depicting the state where the end of slide block 20 is accommodated in the plate pivot 10;
Fig. 3C is a section-view taken along the line A-A of Fig. 3B.
Fig. 4A is a view for explaining "stick-slip";
Fig. 4B is a view for explaining "hysteresis";
Fig. 5 is a view depicting the function of a balancing protrusion 40 and a protrusion attachment portion 44
Fig. 6 is a view the structure that a magnet secured around a plate pivot detects the angle of the mirror surface.

### DETAILED DESCRIPTION OF THE EXEMPLARY EMBODIMENTS OF THE INVENTION

A detail description will be given below, of a mirror and an angle detection device according to one embodiment of the present invention.

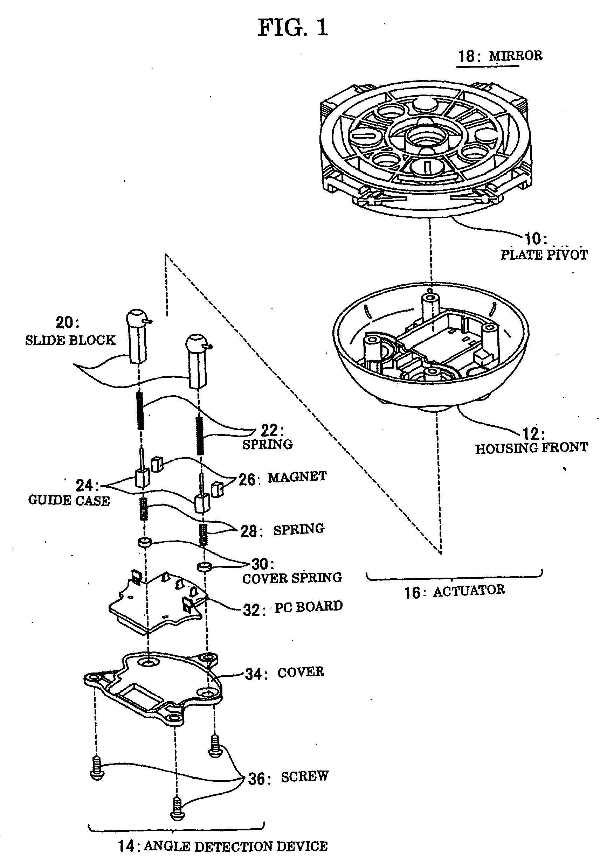

In Fig. 1, the structure of a mirror 18 according to one embodiment of the present invention is shown. In this figure, components unnecessary for detecting the angle of a mirror surface are omitted. The mirror 18 includes not only components shown in this figure, but also a mirror body and a mirror surface.

In this embodiment, the mirror 18 may be an outer mirror for vehicles, and it includes an actuator 16 and an angle detection device 14. The actuator 16 is composed of a housing front 12 and a plate pivot 10.

The housing front 12 is a case that receives the plate pivot 10. The plate pivot 10 is an example of an interlocking member, and swivels around axes parallel to the mirror surface of the mirror 18 , thereby inclining the mirror surface. The plate pivot 10 swivels in conjunction with the mirror surface, so that they face in the same direction. The actuator 16 uses the plate pivot 10 to turn the mirror surface, and as a result, the orientation of the mirror surface changes.

The angle detection device 14 includes the slide blocks 20, springs 22, guide cases 24, magnets 26, springs 28, cover springs 30, a PC board 32, a cover 34, and screws 36. The reason why the angle detection device 14 includes the slide blocks 20, springs 22, guide cases 24, magnets 26, springs 28, and cover springs 30 in pairs is that one of each pair detects the inclination of the mirror surface in the vertical direction, and the other detects it in the horizontal direction.

The slide blocks 20 are urged toward the back surface of the plate pivot 10 across the housing front 12 by the springs 22. When the plate pivot 10 swivels, the slide block 20 moves in the approximately vertical direction with respect to the mirror surface, and the moving amount of the slide block 20 is in proportion to the swivel amount of the plate pivot 10. In this embodiment, the slide blocks 20 may abut against the plate pivot 10 through holes formed in the housing front 12.

The springs 22, which are first urging means, are provided between the magnets 26 and the slide blocks 20, and urge the slide blocks 20 toward the plate pivot 10, respectively. The guide cases 24 accommodate the magnets 26, and support them between the springs 22 and springs 28, respectively. Each magnet 26 may be a permanent magnet. The springs 28, each of which is an example of a second urge means, urge the guide cases 24 toward the springs 22, thereby biasing the magnets 26 toward the springs 22, respectively. The cover springs 30 support the far ends of the springs 28 from the magnets 26, respectively.

In the above structure, the balance between the spring 22 and spring 28 converts the swiveling amount of the mirror surface into a predetermined moving amount of the magnet 26. Furthermore, when the slide block 20 moves in approximately vertical to the mirror surface, the magnet 26 moves in the same direction as that of the slide block 20, and this moving amount is in proportion to and shorter than that of the slide block 20. In this embodiment, the angle detection device 14 may include elastic members other than springs, such as plate members, as first and second urging means.

The PC board 32 is a circuit board in which a circuit, such as an angle detection circuit, including a swivel amount sensing section is mounted. In addition, the PC board 32 is placed facing the plate pivot 10 across the slide blocks 20, springs 22, guide cases 24, magnet 26, springs 28, and cover springs 30. The cover 34 accommodates the slide blocks 20, springs 22, guide cases 24, magnet 26, springs 28, cover springs 30, and PC board 32, together with the housing front 12. The screws 36 secure the cover 34 to the housing front 12.

With the above structure, the angle of the mirror surface can be detected precisely. In addition, the structure allows the angle detection device 14 to be installed at any position in the vertical or horizontal direction with respect to the mirror 18. This improves the flexibility of installing the angle detection device 14, so that an available space inside the actuator 16 can be used efficiently. Consequently, it is possible to miniaturize the actuator unit composed of the angle detection device 14 and the actuator 16. Moreover, the angle detection device 14 can be retrofitted to the actuator 16. Accordingly, a general-purpose actuator can be applied to the angle detection device 14, thereby contributing to the cost reduction in the mirror 18.

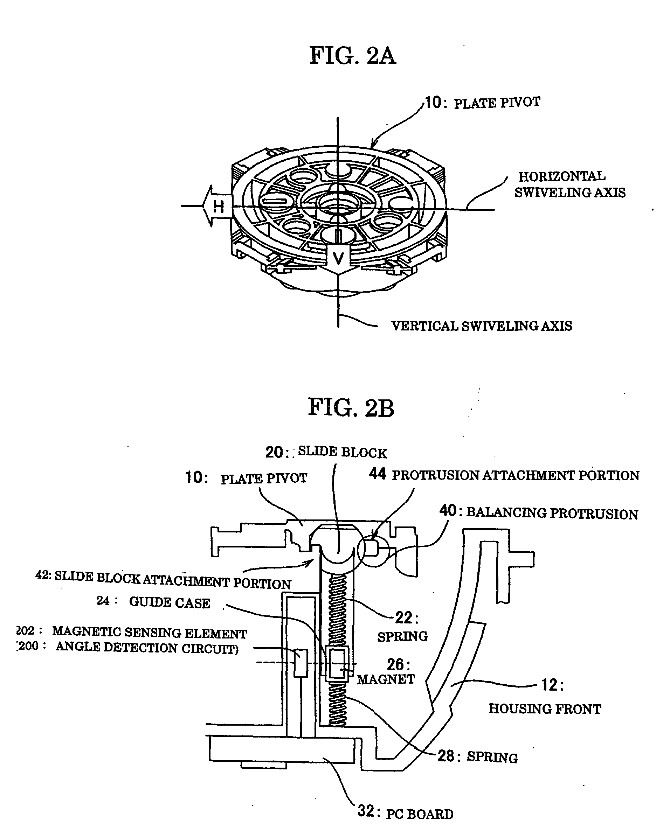

Fig. 2A shows the motion of the plate pivot 10. In this embodiment, the actuator 16 (see Fig. 1) swivels the mirror surface of the mirror 18 (see Fig. 1) around the vertical axis (first axis) and the horizontal axis (second axis).

In the angle detection device 14 (see Fig. 1), the slide blocks 20 are provided corresponding to the vertical and horizontal axes, respectively. Further, the slide blocks 20 are urged toward the predetermined points on the corresponding axes of the plate pivot 10. The magnets 26, magnetic sensing elements 202 and other components are arranged on the center of the corresponding slide blocks 20.

Fig. 2B shows the detail structure of the plate pivot 10 and slide blocks 20. In this embodiment, the slide blocks 20 corresponding to the vertical and horizontal axes are each provided with a balancing protrusion 40.

The plate pivot 10 is equipped with slide block attachment portions 42 and protrusion attachment portions 44 corresponding to the slide blocks 20. The slide block attachment portion 42 is a recess formed in the plate pivot 10, and receives the end of the slide block 20 in such a way that the end can pivot on the portion 42. In other words, the slide block attachment portion 42 supports the end of the slide block 20 such that the end does not slide on the plate pivot 10 when the plate pivot 10 swivels.

In this structure, since the slide block 20 is secured to the plate pivot 10, the stick-slip of the slide block 20 is prevented upon swivel of the plate pivot 10. The inclination of the slide block 20 relative to the plate pivot 10 is constant regardless of the swivel direction of the plate pivot 10. This can prevent the hysteresis from affecting the detection result of the angle detection circuit 200 including the magnetic sensing element 202 on the PC board 32.

The protrusion attachment portion 44 is a recess formed in the plate pivot 10 and close to the slide block attachment portion 42, and it is aligned with the slide block attachment portion 42 on the corresponding axis of the slide block 20. Furthermore, the protrusion attachment portion 44 receives the balancing protrusion 40 of the slide block 20 to thereby support it. In this case, the protrusion attachment portion 44 may support the balancing protrusion 40 in a latch fashion.

With this structure, the slide block 20 corresponding to the vertical (or horizontal) axis can be prevented from moving in the horizontal (or vertical) direction, when the mirror surface swivels in the horizontal (or vertical) direction. This improves the accuracy of output of the angle detection circuit 200.

The angle detection circuit 200 is an example of a swivel amount detection section, and it has a magnetic sensing element 202 such as a hole element or a hole sensor. The angle detection circuit 200 detects the swivel amount of the mirror surface, based on the output of the magnetic sensing element 202 that is in proportion to the moving amount of the slide block 20. It is preferable that the angle detection circuit 200 further includes an operational amplifier for amplifying the output of the magnetic sensing element 202, the magnets 26, and a temperature compensating element for compensating the temperature characteristics of the magnetic sensing element 202. The temperature compensating element may be a thermistor or a temperature-sensitive resistor.

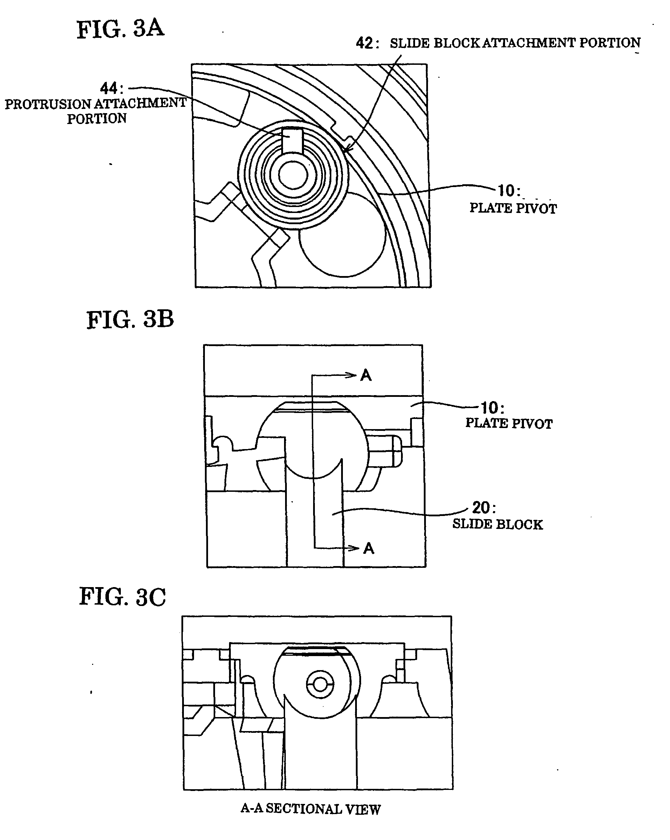

Fig. 3A shows the enlarged periphery of the slide block attachment portion 42, seen from the slide blocks 20. Fig. 3B shows the state where the end of the slide block 20 is accommodated in the plate pivot 10. Fig. 3C shows a cross-section taken along the line A-A of Fig. 3B.

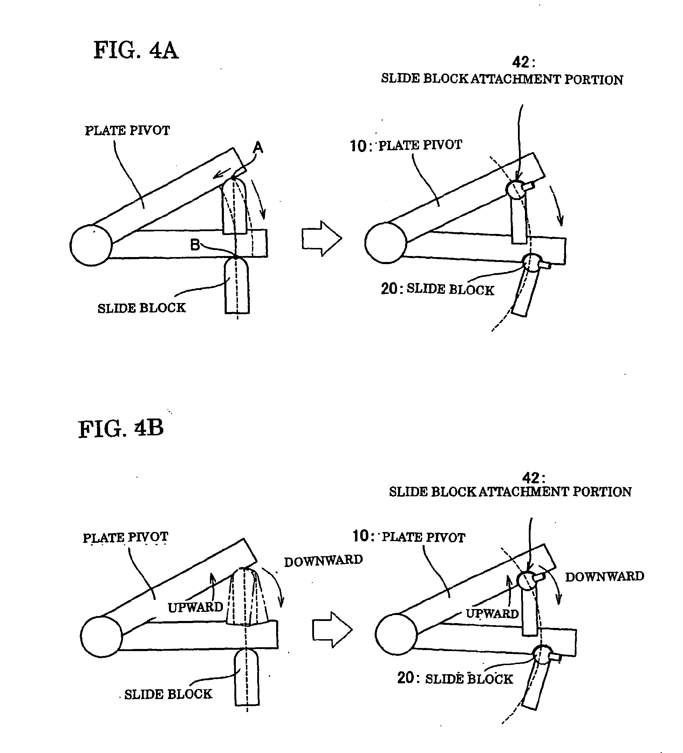

Fig. 4A shows the manner in which the stick-slip of the slide block 20 occurs.

Without the slide block attachment portion 42, the way in which the plate pivot 10 abuts against the slide block 20 is varied when the plate pivot 10 swivels (see the left side of Fig. 4A). Hence, the slide block 20 may shift from A to B points, while sliding on the plate pivot 10, thus causing the stick-slip.

In contrast, with the slide block attachment portion 42, the slide block 20 never makes a slide movement, because it is fixed to the plate pivot 10 (see the right side of Fig. 4A). As a result, it can be found that the slide block attachment portion 42 prevents the stick-slip.

Fig. 4B shows how the hysteresis affects the output of the angle detection circuit 200 (see Fig. 2). Without the slide block attachment portion 42, the angle at which the slide block abuts against the plate pivot 10 differs, depending on the swivel direction (i.e. upward or downward direction) of the plate pivot 10 (see the left portion of Fig. 4B). In this case, the moving amount of the slide block 10 may differ, even when the plate pivot 10 swivels by the same amount. Thus, the hysteresis probably affects the output of the angle detection circuit 200.

In contrast, with the slide block attachment portion 42, the moving amount of the slide block 20 is always constant, as long as the plate pivot 10 swivels by the same amount, regardless of its swiveling direction (see the right portion of Fig. 4B). This is because the slide block 20 is fixed to the plate pivot 10. Consequently, the slide block attachment portion 42 can avoid the generation of the hysteresis.

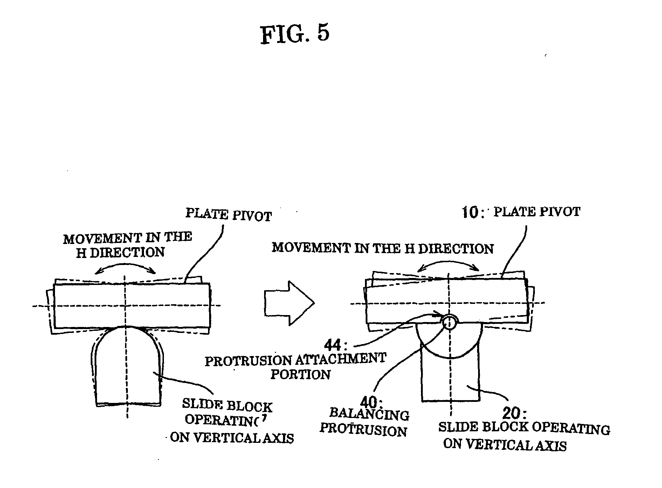

Fig. 5 shows the function of the balancing protrusion 40 and the protrusion attachment portion 44. Without the balancing protrusion 40 and the protrusion attachment portion 44, the slide block 20 corresponding to the vertical axis (V direction) moves in the horizontal direction (H direction), when the plate pivot 10 swivels around the horizontal axis (see the left side of Fig. 5). In this case, the output of the angle detection circuit 200 (see Fig. 2) is varied, thereby reducing the accuracy.

In contrast, with the balancing protrusion 40 and the protrusion attachment portion 44, the slide block 20 is blocked from moving in the H direction (see the right side of Fig. 5). Accordingly, the accuracy is ensured. As described above, by providing the slide block 20 with the balancing protrusion 40, the accuracy of output of the angle detection circuit 200 is ensured.

From the aforementioned explanation, those skilled in the art ascertain the essential characteristics of the present invention and can make the various modifications and variations to the present invention to adapt it to various usages and conditions without departing from the spirit and scope of the claims.
FIG. 1
   - 18: MIRROR
   - 10: PLATE PIVOT
   - 12: HOUSING FRONT
   - 16: ACTUATOR
   - 20: SLIDE BLOCK
   - 22: SPRING
   - 24: GUIDE CASE
   - 26: MAGNET
   - 28: SPRING
   - 30: COVER SPRING
   - 32: PC BOARD
   - 34: COVER
   - 36: SCREW
   - 14: ANGLE DETECTION DEVICE
FIG. 2A
   - 10: PLATE PIVOT
   HORIZONTAL SWIVELING AXIS
   VERTICAL SWIVELING AXIS
FIG. 2B
   - 10: PLATE PIVOT
   - 20: SLIDE BLOCK
   - 44: PROTRUSION ATTACHMENT PORTION
   - 40: BALANCING PROTRUSION
   - 42: SLIDE BLOCK ATTACHMENT PORTION
   - 24: GUIDE CASE
   - 202: MAGNETIC SENSING ELEMENT
   - 200: ANGLE DETECTION CIRCUIT
   - 22: SPRING
   - 26: MAGNET
   - 12: HOUSING FRONT
   - 28: SPRING
   - 32: PC BOARD
FIG. 3A
   - 10: PLATE PIVOT
   - 42: SLIDE BLOCK ATTACHMENT PORTION
   - 44: PROTRUSION ATTACHMENT PORTION
FIG. 3B
   - 10: PLATE PIVOT
   - 20: SLIDE BLOCK
FIG. 3C
   A-A SECTIONAL VIEW
FIG. 4A
   - 10: PLATE PIVOT
   - 20: SLIDE BLOCK
   - 42: SLIDE BLOCK ATTACHMENT PORTION
FIG. 4B
   UPWARD
   DOWNWARD
FIG. 5
   - 10: PLATE PIVOT
   - 20: SLIDE BLOCK OPERATING ON VERTICAL AXIS
   - 40: BALANCING PROTRUSION
   - 44: PROTRUSION ATTACHMENT PORTION
   MOVEMENT IN THE H DIRECTION
FIG. 6
   PLATE PIVOT
   MAGNET
   MAGNET SENSING ELEMENT
   OPERATIONAL AMPLIFIER
   BOARD
   CONNECTION HARNESS TO BOARD

## Claims

1. A mirror having a mirror surface of which orientation is variable, the mirror comprising:
an actuator for changing the orientation of the mirror surface by swiveling the mirror surface around axes parallel to the mirror surface;
an interlocking member for changing its orientation in conjunction with the mirror surface, so as to face in the same direction as that of the mirror surface;
one or more slide blocks being urged toward the interlocking member to thereby move in a direction substantially perpendicular to the mirror surface and in proportion to a swivel amount of the mirror surface, upon swivel of the interlocking member; and
a swivel amount detector for detecting the swivel amount of the mirror surface, based on the moving amounts of the slide blocks;
the interlocking member comprising one or more slide block attachment portions for supporting ends of the slide blocks, so that the ends of the slide blocks do not slide on the interlocking member, upon swivel of the interlocking member.

2. The mirror according to claim 1,
wherein the interlocking member comprises a plate pivot that swivels around the axes parallel to the mirror surface, thereby inclining the mirror surface.

3. The mirror according to claim 1,
wherein each of the slide block attachment portions comprises a recess formed in the interlocking member, and accommodates an end of corresponding one of the slide blocks, thereby supporting the end in such a way that it can pivot.

4. The mirror according to claim 2,
wherein each of the slide block attachment portions comprises a recess formed in the interlocking member, and accommodates an end of corresponding one of the slide blocks, thereby supporting the end in such a way that it can pivot.

5. The mirror according to one of claims 1 through 4, wherein the actuator swivels the mirror surface around first and second axes that are different from each other,
the mirror further comprising first and second slide blocks which operate on the first and second axes, and are urged toward points on the first and second axes of the interlocking member, respectively,
wherein the interlocking member comprises a first balancing mechanism for supporting the first slide block so as not to move in relation to the swivel of the mirror surface around the second axis, and a second balancing mechanism for supporting the second slide block so as not to move in relation to the swivel of the mirror surface around the first axis.

6. The mirror according to claim 5,
wherein the first and second slide blocks have projections protruding along the first and second axes, respectively,
wherein the first and second balancing mechanisms comprise recesses which are placed close to the first and second slide block attachment portions supporting the first and second slide blocks, respectively, and which are arranged on the first and second axes where the first and second slide blocks operate, respectively, and the first and second balancing mechanisms receive the projections of the first and second slide blocks, in this order.

7. An angle detection device for detecting an angle of a mirror surface, comprising:
one or more slide blocks being urged toward an interlocking member that changes its orientation in conjunction with the mirror surface so as to face in the same direction as that of the mirror surface, the slide blocks for moving in a direction substantially perpendicular to the mirror surface and by an amount in proportion to a swivel amount of the interlocking member, when the interlocking member swivels; and
a swivel amount detector for detecting the swivel amount of the mirror surface, based on moving amounts of the slide blocks,
the interlocking member comprising one or more slide block attachment portions for supporting respective ends of the slide blocks so as not to slide on the interlocking member upon swivel of the interlocking member.
